# EUROPEAN PATENT SPECIFICATION

(11) **EP 3 871 751 B1**
(45) Date of publication and mention of the grant of the patent: **25.06.2025**
(21) Application number: 19877026.5
(22) Date of filing: 23.04.2019
(51) Int. Cl.: B01D 46/02, B01D 46/04, B01D 46/42, B01D 46/44, B01D 46/46, B01D 46/48, B01D 46/71, B01D 46/00

(54) **MODULARIZED DUST COLLECTOR SYSTEM AND CONTROL METHOD THEREOF**
MODULARES STAUBSAMMELSYSTEM UND STEUERVERFAHREN DAFÜR
SYSTÈME DE COLLECTEUR DE POUSSIÈRE MODULARISÉ ET SON PROCÉDÉ DE COMMANDE

(30) Priority: 26.10.2018 CN 201811264309
(43) Date of publication of application: 01.09.2021
(73) Proprietor: Zhejiang Hongsheng New Material Technology Group Co., Ltd, Quzhou, Zhejiang 324000 (CN)
(72) Inventor: SONG, Pengze, Quzhou, Zhejiang 324000 (CN); LI, Gang, Quzhou, Zhejiang 324000 (CN); SHAO, Lianmin, Quzhou, Zhejiang 324000 (CN)
(74) Representative: LKGLOBAL Lorenz & Kopf Patentanwalt Attorney at Law PartG mbB
(86) International application number: PCT/CN2019/083856
(87) International publication number: WO 2020/082704

(56) References cited:
- WO-A1-2016/191484
- CN-A- 106 110 779
- CN-A- 106 178 738
- CN-A- 108 079 679
- CN-A- 108 568 166
- CN-A- 109 078 409
- CN-A- 109 173 473
- CN-A- 109 260 858
- CN-A- 109 316 850
- CN-U- 207 237 499
- KR-A- 20010 060 712
- KR-Y1- 200 331 097

## Description

The present application claims the priority to Chinese Patent Application No. 201811264309.6, titled "MODULARIZED DUST COLLECTOR SYSTEM AND CONTROL METHOD THEREOF", filed with the China National Intellectual Property Administration on October 26, 2018.

### FIELD

The present application relates to the technical field of train dust collectors, in particular to a modularized dust collector system and a control method thereof.

### BACKGROUND

A bag filter is a kind of dry dust filter, which uses a bag filter element made of fabric to collect solid particles in dusty gas, and is suitable for collecting fine, dry and non-fibrous dust. With the appearance of new filter materials and various forms of automatic dust removal, this kind of dust removal equipment with a history of more than 100 years is becoming more and more perfect, and it is widely used in modern industrial dust removal.

In the electric power, petrochemical, metallurgy, steel, cement and other industries, the bag filter is applied more and more widely. Most of the components of the dust collector need to be transported to a local area, assembled on site. Thus its entire workload on site is huge, and its installation period is more than three months. Due to the limitation of on-site working conditions, the construction quality is easily affected, and the on-site working efficiency is reduced. Moreover, some auxiliary equipment need to be transported to the site for assembly before installation, and need to be dismantled and transported away from the site after installation, resulting in a large amount of labor and material consumption. At the same time, it may have a great impact on the normal production and life of the owners at the working condition site and increase the risk. This method not only has low efficiency, long construction period, high cost and large floor area, but also has difficulty to ensure the accuracy of installation, thus seriously affecting the dust removal effect of the dust collector.

At the same time, the maintenance of the existing dust collector system is relatively cumbersome, especially the filter bag replacement of the filter unit, the bag cage and filter bag need to be drawn out one by one from the dust collector, and then a new filter bag is replaced. The long maintenance period and long replacement time of the filter bag seriously affect the normal production. In addition, the existing dust removal method of the external filter bag dust collector is mainly a pulse jet bag dust collector. The dust removal method of the pulse jet bag dust collector is to blow the filter bag with high pressure air of 0.2-0.5Mpa at a high speed, so that the filter bag generates pulse expansion vibration from the inside to the outside, and the outer surface of the filter bag obtains a large acceleration, thus shaking off the dust layer on the surface, This dust removal method has good dust removal effect, but it has the problems of high dust removal pressure and short filter bag life.

Therefore, how to provide a modularized dust collector system and a control method thereof, which may save time and cost, improve efficiency, and ensure the dust removal effect, has become a technical problem urgently needed to be addressed by those skilled in the art.

CN106110779A discloses a flat cloth dust filter for a grain storage cleaning center. The filter comprises a casing, a wind and dust suction chamber arranged in the casing, a storage material channel communicated with the wind and dust suction chamber, a dust removal filtering chamber communicated with the wind and dust suction chamber, a centrifugal fan for providing wind suction negative pressure to the dust removal filtering chamber, an air blowback system for cleaning dust in the dust removal filtering chamber, and a dust collection and treatment system below the dust removal filtering chamber. The filter is applicable to storage and conveying equipment in the grain storage cleaning center, and has the advantages of fast and stable dust removal, good effect, clean and environment-friendly dust removal process, uniform efficient cleaning of the dust attached to the flat cloth and time-saving and labor-saving dust collection.

### SUMMARY

An object of the present description is to provide a modularized dust collector system and a control method thereof, which solves the technical problems of low efficiency, long construction period and high cost of the existing dust collector.

The present description provides a modularized dust collector system, including an air inlet guide device, a filtering device, a dust removal device, an air outlet device and a dust collecting device; the air inlet guide device is communicated with the filtering device, the air inlet guide device adopts a box structure, and includes a smoke dust inlet channel, a smoke dust guide plate and an air flow distribution plate, the smoke dust guide plate and the air flow distribution plate are arranged in the smoke dust inlet channel; the filtering device includes a dust collector dust gas box, and a dust filter bag arranged inside the dust collector dust gas box; the filtering device is an integrated drawer-type push-pull structure as a whole; the air outlet device is in communication with the filtering device, and the air outlet device includes a dust collector clean air box, and an air outlet channel arranged inside the dust collector clean air box; the dust removal device is arranged in the dust collector clean air box, and the dust removal device includes a blowback structure and a blow pipe connected to the blowback
structure; the dust collecting device is in communication with the filtering device, and the dust collecting device adopts a box structure; a dust hopper is provided in an upper area of the box structure, and a dust conveying mechanism is provided in the lower area of the box structure. The blowback structure is connected with the sliding track in a sliding way, and a driving mechanism is arranged, and the driving mechanism is used for driving the blowback structure to move along the sliding track,
the driving mechanism comprises a motor, a lead screw and a moving block; the lead screw is arranged in the sliding track, the motor is connected with one end of the lead screw through a coupling, another end of the lead screw is rotationally connected with a baffle in the length direction of the sliding track through a bearing, a screw hole is arranged in the moving block for being cooperated and connected with the lead screw, and the moving block is also connected with a connecting part of the blowback structure, the motor drives the lead screw to rotate through the coupling to make the moving block move linearly, and the moving block drives the blow pipe to move through the connecting part, so that the blow pipe blows the dust filter bag in sequence.

In practical application, an entrance of the smoke dust inlet channel of the air inlet guide device is of a bell mouth structure; the smoke dust guide plate adopts an equal air volume variable diameter structure, and the air flow distribution plate is arranged at a smoke dust outlet.

The air flow distribution plate of the air inlet guide device includes multiple air flow distribution plates, and the multiple air flow distribution plates are evenly spaced apart along the length direction of the smoke dust inlet channel.

In actual application, the filtering device includes multiple dust filter bags, and the multiple dust filter bags are arranged in a bag cage, and the bag cage is arranged in the dust collector dust gas box.

In actual application, the air outlet device further includes a low-temperature heat exchanger, the low-temperature heat exchanger is located at an outlet of the dust collector clean air box and is used for heat recovery and utilization.

The low-temperature heat exchanger of the air outlet device is provided with PTFE pipes and heat conducting media therein.

In actual application, the dust removal device further includes an ultrasonic auxiliary dust cleaner, the ultrasonic auxiliary dust cleaner converts the kinetic energy of the pressure gas into the fluctuating energy of the sound wave, and uses the fluctuating energy of the sound wave to achieve the purpose of removing dust.

In actual application, the blowback structure is connected with the sliding track in a sliding way, and a driving mechanism is arranged, and the driving mechanism is used for driving the blowback structure to move along the sliding track, so that the blow pipe may be communicated with the dust filter bag in turn.

The dust conveying method of the dust conveying mechanism of the dust collecting device adopts pneumatic conveying.

Compared with the conventional technology, the modularized dust collector system of the present application has the following advantages.

The modularized dust collector system provided by the present application includes the air inlet guide device, the filtering device, the dust removal device, the air outlet device and the dust collecting device; the air inlet guide device is communicated with the filtering device, the air inlet guide device adopts a box structure, and includes the smoke dust inlet channel, the smoke dust guide plate and the air flow distribution plate, and the smoke dust guide plate and the air flow distribution plate are arranged in the smoke dust inlet channel; the filtering device includes the dust collector dust gas box, and the dust filter bag arranged inside the dust collector dust gas box; the filtering device is the integrated drawer-type push-pull structure as a whole; the air outlet device is in communication with the filtering device, and the air outlet device includes the dust collector clean air box, and the air outlet channel arranged inside the dust collector clean air box; the dust removal device is arranged in the dust collector clean air box, and the dust removal device includes the blowback structure and the blow pipe connected to the blowback structure; the dust collecting device is in communication with the filtering device, and the dust collecting device adopts a box structure. The dust hopper is provided in the upper area of the box structure, and a dust conveying mechanism is provided in the lower area of the box structure.

When the modularized dust collector system provided by the present application is used, dust-containing flue gas first passes through the smoke dust inlet channel, the smoke dust guide plate and the air flow distribution plate of the air inlet guide device, and then the dust-containing flue gas uniformly enters the filtering device, during which a part of large-particle dust falls directly into the dust hopper of the dust collecting device due to gravity and interception in the air inlet guide device; in the dust gas box of the dust collector of the filtering device, a pressure difference is formed inside and outside the dust filter bag, air flows into the dust filter bag, dust is intercepted by the dust filter bag, and is filtered and resides on the outer surface of the dust filter bag, clean gas enters the dust collector clean gas box of the air outlet device through the mouth of the dust filter bags, and then is discharged through the air outlet channel of the air outlet device to realize gas-solid separation; after dust accumulated on the surface of dust filter bag to a certain extent, the pressure difference inside and outside the filter bag may rise. When the pressure difference reaches the set value or after the set time, the dust removal device may clean the dust filter bag, and the blowback structure and the blow pipe may blow the dust accumulated on the surface of the dust filter bag with steering flow, so as to realize the regeneration of the dust filter bag; the dust cleared by the dust removal device falls into the dust hopper of the dust collecting device, and passes through the dust conveying mechanism of the dust collecting device to convey the dust collected in the dust hopper to the designated area.

From this analysis, it may be seen that the modularized dust collector system provided by the present application may be assembled and produced in a modular manner by a factory because the air inlet guide device, the filtering device, the air outlet device and the dust collecting device all adopt a box structure, and may be assembled into a combined bag dust collector, that is, a modularized dust collector system according to field application requirements, thereby saving time and cost and improving efficiency; the air inlet guide device is communicated with the filtering device, the dust removal device is used for removing dust accumulated on the surface of the filter bag in the filtering device, and the filtering device is respectively communicated with the air outlet device and the dust collecting device, thereby effectively ensuring the dust removal effect. The modularized dust collector system provided by the present application adopts the structural form of the container standard modularized dust collector, thereby facilitating transportation and installation, greatly reducing the workload of transportation and on-site hoisting, splicing, welding and the like, effectively shortening the construction period, improving the work efficiency and reducing the installation cost; meanwhile, the air inlet guide device, the filtering device, the air outlet device and the dust collecting device are in the form of independent units, so that the number of independent units of the dust collector may be selectively used according to actual needs, thus saving space and occupying a small area.

The present application further provides a control method of modularized dust collector system, and dust-containing flue gas first passes through the smoke dust inlet channel, the smoke dust guide plate and the air flow distribution plate of the air inlet guide device, and then the dust-containing flue gas uniformly enters the filtering device, during which a part of large-particle dust falls directly into the dust hopper of the dust collecting device due to gravity and interception in the air inlet guide device; in the dust gas box of the dust collector of the filtering device, a pressure difference is formed inside and outside the dust filter bag, air flows into the dust filter bag, dust is intercepted by the dust filter bag, and is filtered and resides on the outer surface of the dust filter bag, clean gas enters the dust collector clean air box of the air outlet device through the mouth of the dust filter bags, and then is discharged through the air outlet channel of the air outlet device to realize gas-solid separation. After dust accumulated on the surface of dust filter bag to a certain extent, the pressure difference inside and outside the filter bag may rise. When the pressure difference reaches the set value or after the set time, the dust removal device may clean the dust filter bag, and the blowback structure and the blow pipe may blow the dust accumulated on the surface of the dust filter bag with steering flow, so as to realize the regeneration of the dust filter bag. The dust cleared by the dust removal device falls into the dust hopper of the dust collecting device, and passes through the dust conveying mechanism of the dust collecting device to convey the dust collected in the dust hopper to a designated area.

The control method of the modularized dust collector system has the same advantages as the foregoing modularized dust collector system over the conventional technology, and is not repeated here.

### BRIEF DESCRIPTION OF THE DRAWINGS

The drawings to be used in the description of the embodiments or the conventional technology will be described briefly as follows, so that the technical solutions according to the embodiments of the present application or according to the conventional technology will become clearer. It is apparent that the drawings in the following description only illustrate some embodiments of the present application. For those skilled in the art, other drawings may be obtained according to these drawings without any creative work.
FIG. 1 is a schematic structural diagram of a modularized dust collector system provided by an embodiment of the present application;
FIG. 2 is a schematic structural diagram of an air inlet guide device in a modularized dust collector system provided by the embodiment of the present application;
FIG. 3 is a schematic structural diagram of another air inlet guide device in a modularized dust collector system provided by the embodiment of the present application;
FIG. 4 is a schematic structural diagram of a filtering device in a modularized dust collector system provided by the embodiment of the present application;
FIG. 5 is a schematic structural diagram of an air outlet device in a modularized dust collector system provided by the embodiment of the present application;
FIG. 6 is a schematic structural diagram of a dust collecting device in a modularized dust collector system provided by the embodiment of the present application;
FIG. 7 is a schematic structural diagram of the modularized dust collector system provided by the embodiment of the present application when the filtering device adopts an integrated drawer-type push-pull structure.

Reference numerals are listed as follows:

| | | | |
|---|---|---|---|
| 2 | air inlet guide device, | 21 | smoke dust inlet channel, |
| 22 | smoke dust guide plate, | 23 | air flow distribution plate, |
| 3 | filtering device, | 31 | dust gas box of a dust collector, |
| 32 | dust filter bag, | 33 | bag cage, |
| 4 | dust removal device, | 41 | blowback structure |
| 42 | blow pipe, | 5 | air outlet device, |
| 51 | dust collector clean gas box, | 52 | air outlet channel, |
| 6 | dust collecting device, | 61 | dust hopper, |
| 62 | dust conveying mechanism. | | |

### DETAILED DESCRIPTION OF THE EMBODIMENTS

The technical solutions according to the embodiments of the present application will be described clearly and completely as follows in conjunction with the drawings. It is apparent that the described embodiments are only a part of the embodiments according to the present application, rather than all the embodiments. Any other embodiments obtained by those skilled in the art based on the embodiments in the present application without any creative work fall in the scope of protection of the present application.

In the description of the present application, it should be noted that the orientation or positional relationships indicated by terms such as "center", "up", "down", "left", "right", "vertical", "horizontal", "inner", "outer", and the like are based on the orientation or positional relationships shown in the drawings, and are merely for the convenience of describing the present application and the simplification of the description, and do not indicate or imply that the system or element referred to must have a particular orientation, or be configured and operated in a particular orientation, and therefore should not be construed as a limitation to the scope of the present application. In addition, the terms "first", "second", "third" and the like are only for purpose of description, and should not be construed as indicating or implying relative importance.

In the description of the present application, it should be noted that, otherwise clear specification and definition are provided, terms such as "installation", "joint" and "connection" should be understood in a broad sense, such as a fixed connection, a detachable connection or an integral connection; a mechanical connection or an electrical connection; a direct connection or an indirect connection through an intermediate media, or an internal connection inside two components. For those skilled in the art, the specific meaning of the above terms in the present application may be understood in the light of specific circumstances.

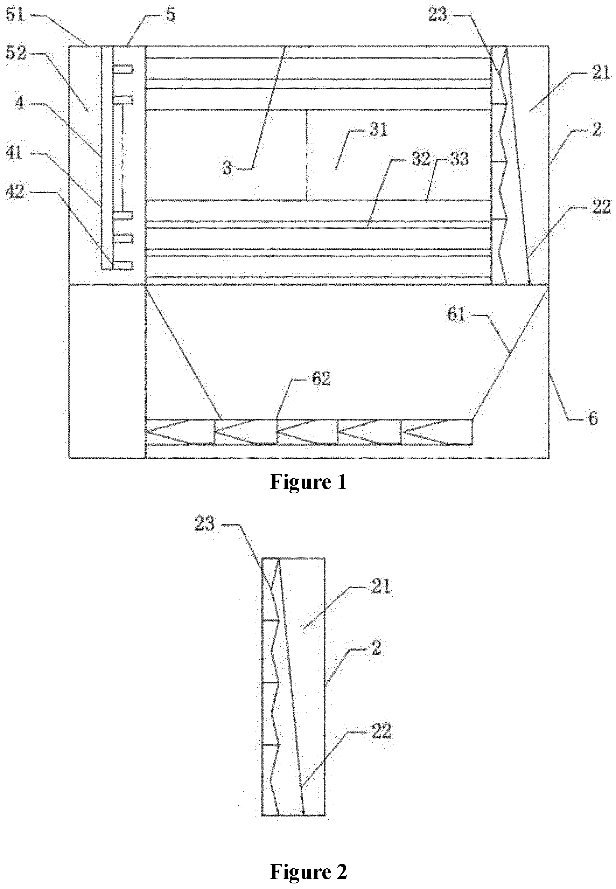

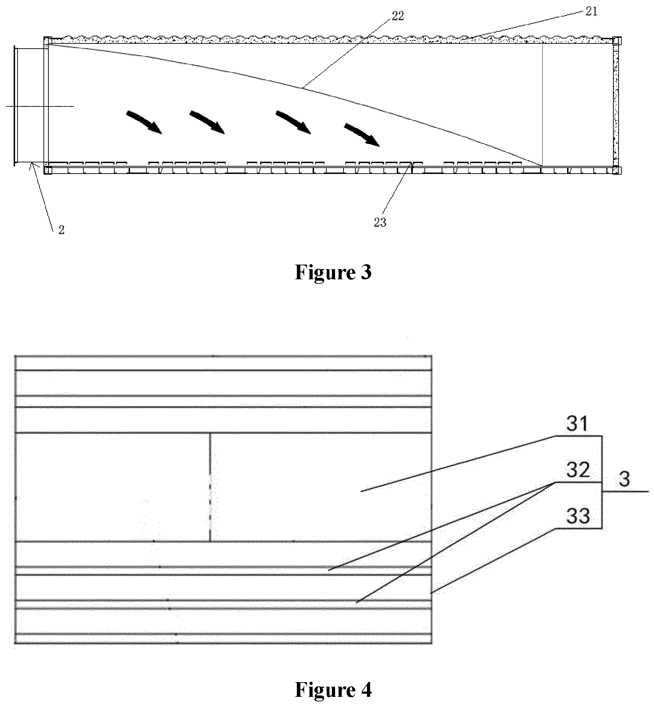

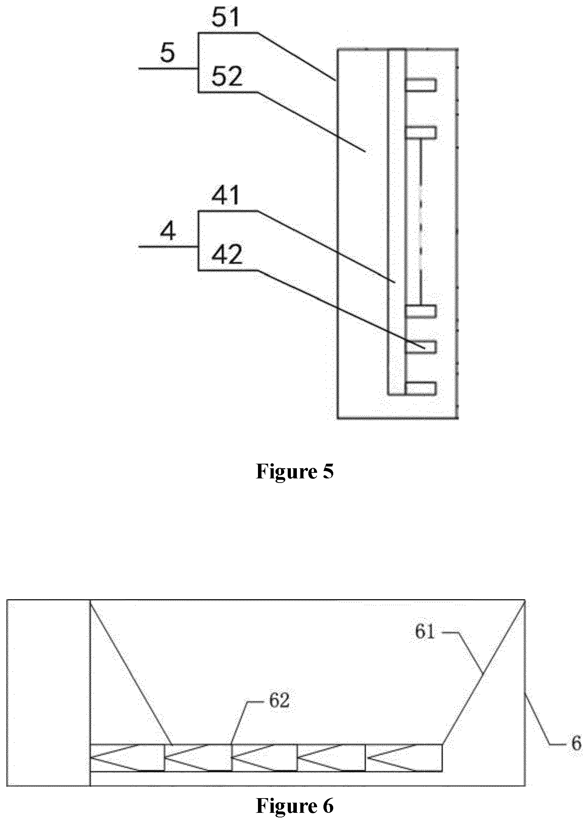

FIG. 1 is a schematic structural diagram of a modularized dust collector system provided by an embodiment of the present application; FIG. 2 is a schematic structural diagram of an air inlet guide device in the modularized dust collector system provided by the embodiment of the present application; FIG. 3 is a schematic structural diagram of another air inlet guide device in the modularized dust collector system provided by the embodiment of the present application; FIG. 4 is a schematic structural diagram of a filtering device in the modularized dust collector system provided by the embodiment of the present application; FIG. 5 is a schematic structural diagram of an air outlet device in the modularized dust collector system provided by the embodiment of the present application; FIG. 6 is a schematic structural diagram of a dust collecting device in the modularized dust collector system provided by the embodiment of the present application.

As shown in FIG.1 to FIG.6, the present application provides a modularized dust collector system, including an air inlet guide device 2, a filtering device 3, a dust removal device 4, an air outlet device 5 and a dust collecting device 6; the air inlet guide device 2 is communicated with the filtering device 3, the air inlet guide device 2 is of a box structure, and includes a smoke dust inlet channel 21, a smoke dust guide plate 22 and an air flow distribution plate 23, and the smoke dust guide plate 22 and the air flow distribution plate 23 are arranged in the smoke dust inlet channel 21; the filtering device 3 includes a dust collector dust gas box 31, and a dust filter bag 32 arranged inside the dust collector dust gas box 31 ; in addition, the filtering device 3 is an integrated drawer-type push-pull structure as a whole; the air outlet device 5 is in communication with the filtering device 3, and the air outlet device 5 includes a dust collector clean air box 51, and an air outlet channel 52 arranged inside the dust collector clean air box 51; the dust removal device 4 is arranged in the dust collector clean air box 51, and the dust removal device 4 includes a blowback structure 41 and a blow pipe 42 connected to the blowback structure 41; the dust collecting device 6 is in communication with the filtering device 3, and the dust collecting device 6 is of a box structure. A dust hopper 61 is provided in an upper area of the box structure, and a dust conveying mechanism 62 is provided in the lower area of the box structure.

Compared with the conventional technology, the modularized dust collector system according to the embodiment of the present application has the following advantages:
the modularized dust collector system provided by the embodiment of the present application, as shown in FIG.1 to FIG.6, includes the air inlet guide device 2, the filtering device 3, the dust removal device 4, the air outlet device 5 and the dust collecting device 6; the air inlet guide device 2 is communicated with the filtering device 3, the air inlet guide device 2 is of a box structure, and includes the smoke dust inlet channel 21, the smoke dust guide plate 22 and the air flow distribution plate 23, and the smoke dust guide plate 22 and the air flow distribution plate 23 are arranged in the smoke dust inlet channel 21; the filtering device 3 includes the dust collector dust gas box 31, and the dust filter bag 32 arranged inside the dust collector dust gas box 31; in addition, the filtering device 3 is the integrated drawer-type push-pull structure as a whole; the air outlet device 5 is in communication with the filtering device 3, and the air outlet device 5 includes the dust collector clean air box 51, and the air outlet channel 52 arranged inside the dust collector clean air box 51; the dust removal device 4 is arranged in the dust collector clean air box 51, and the dust removal device 4 includes the blowback structure 41 and the blow pipe 42 connected to the blowback structure 41; the dust collecting device 6 is in communication with the filtering device 3, and the dust collecting device 6 is of a box structure. The dust hopper 61 is provided in the upper area of the box structure, and the dust conveying mechanism 62 is provided in the lower area of the box structure.

When the modularized dust collector system provided by the embodiment of the present application is used, dust-containing flue gas first passes through the smoke dust inlet channel 21, the smoke dust guide plate 22 and the air flow distribution plate 23 of the air inlet guide device 2, and then the dust-containing airflow uniformly enters the filtering device 3, during which a part of large-particle dust falls directly into the dust hopper 61 of the dust collecting device 6 due to gravity and interception in the air inlet guide device 2; in the dust gas box of the dust collector 31 of the filtering device 3, a pressure difference is formed inside and outside the dust filter bag 32, air flows into the dust filter bag 32, dust is intercepted by the dust filter bag 32, and is filtered and resides on the outer surface of the dust filter bag 32, clean gas enters the dust collector clean gas box 51 of the air outlet device 5 through a mouth of the dust filter bag 32, and then is discharged through the air outlet channel 52 of the air outlet device 5 to realize gas-solid separation; after dust accumulated on the surface of dust filter bag 32 to a certain extent, the pressure difference inside and outside the filter bag may rise. When the pressure difference reaches a set value or after a set time, the dust removal device 4 may clean the dust filter bag 32, and the blowback structure 41 and the blow pipe 42 may blow the dust accumulated on the surface of the dust filter bag 32 with steering flow, so as to realize the regeneration of the dust filter bag 32; the dust cleared by the dust removal device falls into the dust hopper 61 of the dust collecting device 6, and passes through the dust conveying mechanism 62 of the dust collecting device 6 to convey the dust collected in the dust hopper 61 to a designated area.

From this analysis, it may be seen that the modularized dust collector system provided by the embodiment of the present application may be assembled and produced in a modular manner by a factory because the air inlet guide device 2, the filtering device 3, the air outlet device 5 and the dust collecting device 6 are all of a box structure, and may be assembled into a combined bag dust collector, that is, a modularized dust collector system according to field application requirements, thereby saving time and cost and improving efficiency; in addition, the air inlet guide device 2 is communicated with the filtering device 3, the dust removal device 4 is used for removing dust accumulated on the surface of the filter bag in the filtering device 3, and the filtering device 3 is respectively communicated with the air outlet device 5 and the dust collecting device 6, thereby effectively ensuring the dust removal effect. The modularized dust collector system provided by the embodiment of the present application adopts the structural form of the container standard modularized dust collector, thereby facilitating transportation and installation, greatly reducing the workload of transportation and on-site hoisting, splicing, welding and the like, effectively shortening the construction period, improving the work efficiency and reducing the installation cost; meanwhile, the air inlet guide device 2, the filtering device 3, the air outlet device 5 and the dust collecting device 6 are in the form of independent units, so that the number of independent units of the dust collector may be selectively used according to actual needs, thus saving space and occupying a small area.

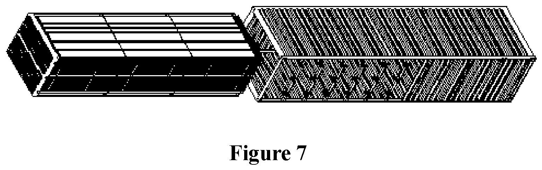

FIG. 7 is a schematic structural diagram of the modularized dust collector system provided by the embodiment of the present application when the filtering device adopts an integrated drawer-type push-pull structure.

It needs to be added here that, as shown in FIG. 7, the dust collector dust gas box 31 may be disposed with a drawer-type frame body, and a roller is arranged on the bottom beam of the box body through a rotating shaft. Meanwhile, multiple beams are arranged and spaced apart at the bottom of the box body, and are slidably assembled into the dust collector dust gas box 31 by the horizontal movable drawer-type frame body and the rollers. A lifting device is arranged at a box outlet of the dust collector dust gas box 31, which is used for lifting the frame body so as to quickly replace a new dust filter bag 32; when the dust collector dust gas box 31 is installed at a relatively high position, it may be complicated when the dust filter bag 32 needs to be replaced and hoisted. Therefore, with the lifting device, it is convenient for the frame body to slide out of the box body and enter the platform of the lifting device, and then the lifting device descends to the ground, so as to replace the dust filter bag 32. After all replacement, the frame body with the new dust filter bag 32 is lifted to the box outlet of the dust collector dust gas box 31 through the lifting device, and then the frame body slides into the box again to realize replacement; the lifting device in this embodiment may be a scissor type lifting platform.

In actual application, as shown in FIG. 2 and FIG. 3, the entrance of the smoke dust inlet channel 21 of the air inlet guide device 2 adopts a bell mouth structure, so that the air flow entering the dust collector may be uniformly diffused.

The smoke dust guide plate 22 adopts a variable diameter structure with equal air volume, so as to ensure that the air flow speed (wind speed) is consistent, and further ensure that the air flow may uniformly enter the filtering device 3. In order to ensure that the airflow speed (wind speed) is consistent, the smoke dust guide plate 22 may be arranged along the length direction of the smoke dust inlet channel 21 and be of an arc shape; or, the smoke dust guide plate 22 may be inclined along the length direction of the smoke dust inlet channel 21.

Specifically, the air flow distribution plate 23 is arranged at the smoke outlet, that is, the air flow distribution plate 23 may be arranged between the smoke dust inlet channel 21 and the filtering device 3.

Further, multiple (e.g., four or five) air flow distribution plates 23 may be provided, and the multiple air flow distribution plates 23 may preferably be evenly spaced apart along the length direction of the smoke dust inlet channel 21, that is, the multiple air flow distribution plates 23 are uniformly spaced apart along the length direction of the smoke dust inlet channel 21.

Furthermore, the dust-containing flue gas may enter from above the filtering device 3 through the smoke dust inlet channel 21, and a direction of the dust precipitation is consistent with the movement direction of the flue gas, thus facilitating the dust precipitation in the dust collecting device during the operation (filtering/cleaning) of the dust collector, and further reducing the probability of "secondary dust raising". This kind of setting and air inlet method is more effective when dealing with dust-containing flue gas containing more ultrafine dust, and reduces the running resistance of the dust collector equipment.

Alternatively, the dust-containing flue gas may enter from a side of the filtering device 3 through the smoke inlet channel 21. Of course, the air inlet mode is not limited to upper air inlet and side air inlet.

In actual application, as shown in FIG.4, the filtering device 3 includes multiple dust filter bags 32, and the multiple dust filter bags 32 may be arranged in a bag cage 33 which is arranged in the dust collector dust gas box 31, so that the dust-removing purification effect may be further effectively improved by arranging the multiple dust filter bags 32, and the bag cage 33 is beneficial to replacing the multiple dust filter bags 32 conveniently and quickly.

In actual application, as shown in FIG. 5, the air outlet device 5 further includes a low-temperature heat exchanger (not shown in the figure), which may be located at the outlet of the dust collector clean air box 51 for heat recovery and utilization.

The low-temperature heat exchanger of the air outlet device 5 is provided with PTFE pipes and heat-conducting medium inside, so that good heat recovery is realized through the PTFE pipes and heat-conducting medium.

It should be added here that Polytetrafluoroethylene (PTFE) is generally called "non-stick coating" or "easy-to-clean material". This material has the characteristics of acid resistance, alkali resistance and resistance to various organic solvents, and is almost insoluble in all solvents. Meanwhile, PTFE has the characteristics of high temperature resistance, and its friction coefficient is extremely low, so it may be used for lubrication and become an ideal coating for easy cleaning of the inner layer of water pipes.

Specifically, the air outlet channel 52 may adopt an equal air volume variable diameter structure, so that the air flow velocity (wind speed) in the channel may be effectively ensured to be consistent through the equal air volume variable diameter structure.

Further, the air outlet of the air outlet channel 52 may be provided with an electronically controlled regulating valve, so that the air volume may be effectively controlled by the electronically controlled regulating valve.

Furthermore, the air outlet mode may be upward or lateral air outlet; of course, the air outlet mode is not limited to the upward air outlet and the lateral air outlet, and may also be other reasonable forms.

In actual application, as shown in FIG.5, the dust removal device 4 further includes an ultrasonic auxiliary dust cleaner, the ultrasonic auxiliary dust cleaner converts the kinetic energy of the pressure gas into the fluctuating energy of the sound wave, and uses the fluctuating energy of the sound wave to achieve the purpose of removing dust.

In actual application, as shown in FIG.6, the blowback structure 41 is connected with the sliding track in a sliding way, and a driving mechanism is arranged, and the driving mechanism is able to drive the blowback structure 41 to move along the sliding track, so that the blow pipe 42 is communicated with the dust filter bags 32 in turn.

Specifically, the driving mechanism may include a motor, a lead screw and a moving block; the lead screw is arranged in the sliding track, the motor is connected with one end of the lead screw through a coupling, another end of the lead screw is rotationally connected with a baffle in the length direction of the sliding track through a bearing, a screw hole is arranged in the moving block for being cooperated and connected with the lead screw, and the moving block is also connected with a connecting part of the blowback structure 41. The motor drives the lead screw to rotate through the coupling to make the moving block move linearly, and the moving block drives the blow pipe 42 to move through the connecting part, so that the blow pipe 42 may blow the dust filter bags 32 in sequence, thus achieving the purpose of high-efficiency dust removal.

Preferably, two sliding tracks may be provided, and the two sliding tracks are arranged at the positions of the two ends of the blowback structure 41; the function of the two sliding tracks is to ensure a stable support. The sliding track may be preferably set in a U-shape, and the middle part of the sliding track is used for accommodating the lead screw and the moving block; two ends of the connecting part are respectively connected with the U-shaped sliding track, the middle part of the connecting part is fixedly connected with the moving block. When the lead screw drives the connecting block to move along the length direction of the lead screw and the sliding track, the moving block may drive the connecting part and the blowback structure 41 to move along the length direction of the sliding track, so that the blow pipe 42 passes through each row of the dust filter bags 32 in turn, and gradually cleans the dust.

The dust conveying method of the dust conveying mechanism 62 of the dust collecting device 6 adopts pneumatic conveying, thereby effectively saving costs through pneumatic conveying and ensuring a good dust conveying effect.

The embodiment of the present application further provides a control method of a modularized dust collector system, dust-containing flue gas first passes through the smoke dust inlet channel 21, the smoke dust guide plate 22 and the air flow distribution plate 23 of the air inlet guide device 2, and then the dust-containing airflow uniformly enters the filtering device 3, during which a part of large-particle dust falls directly into the dust hopper 61 of the dust collecting device 6 due to gravity and interception in the air inlet guide device 2; in the dust gas box of the dust collector 31 of the filtering device 3, a pressure difference is formed inside and outside the dust filter bag 32, air flows into the dust filter bag 32, dust is intercepted by the dust filter bag 32, filtered and resides on the outer surface of the dust filter bag 32, clean gas enters the dust collector clean gas box 51 of the air outlet device 5 through the dust filter bag 32 mouth, and then is discharged through the air outlet channel 52 of the air outlet device 5 to realize gas-solid separation; after dust accumulated on the surface of dust filter bag 32 to a certain extent, the pressure difference inside and outside the filter bag may rise. When the pressure difference reaches the set value or after the set time, the dust removal device 4 may clean the dust filter bag 32, and the blowback structure 41 and the blow pipe 42 may blow the dust accumulated on the surface of the dust filter bag 32 with steering flow, so as to realize the regeneration of the dust filter bag 32; the dust cleared by the dust removal device falls into the dust hopper 61 of the dust collecting device 6, and passes through the dust conveying mechanism 62 of the dust collecting device 6 to convey the dust collected in the dust hopper 61 to the designated area.

The modularized dust collector system and the control method thereof provided by the embodiment of the present application mainly have the following advantages:
1. the workload of on-site hoisting, splicing and welding by more than 90% is reduced, and the on-site installation is simple and easy;
2. the construction period by more than 80% is effectively shortened, the working efficiency is improved and the installation cost is reduced;
3. the occupied space is small, the transportation is convenient, and the occupied area is reduced by more than one third;
4. the number of modularized dust collectors may be adjusted according to the actual processing air volume;
5. the dust removal medium adopts clean flue gas, and the dust removal air volume is internal circulation to softly remove the dust, which may not increase the load on the induced draft fan; at the same time, it solves the problems of dust filter bag damage, condensation and oxidation caused by the dust removal medium, and extends the sevice life of the filter cloth.

The above is only a preferred embodiment of the present application, and is not intended to limit the present application.

## Claims

1. A modularized dust collector system, comprising an air inlet guide device (2), a filtering device (3), a dust removal device (4), an air outlet device (5) and a dust collecting device (6);
wherein the air inlet guide device (2) is communicated with the filtering device (3), the air inlet guide device (2) is of a box structure, and includes a smoke dust inlet channel (21), a smoke dust guide plate (22) and an air flow distribution plate (23), and the smoke dust guide plate (22) and the air flow distribution plate (23) are arranged in the smoke dust inlet channel (21); and
the filtering device (3) comprises a dust collector dust gas box (31), and a dust filter bag (32) arranged inside the dust collector dust gas box (31); the filtering device (3) is an integrated drawer-type push-pull structure as a whole; and
the air outlet device (5) is in communication with the filtering device (3), and the air outlet device (5) includes a dust collector clean air box (51), and an air outlet channel (52) arranged inside the dust collector clean air box (51); and
the dust removal device (4) is arranged in the dust collector clean air box, and the dust removal device (4) comprises a blowback structure (41) and a blow pipe (42) connected to the blowback structure (41); and
the dust collecting device (6) is in communication with the filtering device (3), and the dust collecting device (6) is of a box structure; a dust hopper (61) is provided in an upper area of the box structure, and a dust conveying mechanism (62) is provided in a lower area of the box structure,
**characterized in that**
the blowback structure (41) is connected with the sliding track in a sliding way, and a driving mechanism is arranged, and the driving mechanism is used for driving the blowback structure (41) to move along the sliding track,
the driving mechanism comprises a motor, a lead screw and a moving block; the lead screw is arranged in the sliding track, the motor is connected with one end of the lead screw through a coupling, another end of the lead screw is rotationally connected with a baffle in the length direction of the sliding track through a bearing, a screw hole is arranged in the moving block for being cooperated and connected with the lead screw, and the moving block is also connected with a connecting part of the blowback structure (41), the motor drives the lead screw to rotate through the coupling to make the moving block move linearly, and the moving block drives the blow pipe (42) to move through the connecting part, so that the blow pipe (42) blows the dust filter bag (32) in sequence.

2. The modularized dust collector system according to claim 1, wherein an entrance of the smoke dust inlet channel (21) of the air inlet guide device (2) is of a bell mouth structure.

3. The modularized dust collector system according to claim 1 or 2, wherein the air flow distribution plate (23) of the air inlet guide device (2) comprises a plurality of air flow distribution plates, and the plurality of air flow distribution plates is spaced apart along the length direction of the smoke dust inlet channel (21).

4. The modularized dust collector system according to claim 1, wherein the dust filter bag (32) of the filtering device (3) comprises a plurality of dust filter bags, and the plurality of dust filter bags is arranged in a bag cage, and the bag cage is arranged in the dust collector dust gas box (31).

5. The modularized dust collector system according to claim 1, wherein the air outlet device (5) further comprises a low-temperature heat exchanger, the low-temperature heat exchanger is located at an outlet of the dust collector clean air box (51) and is used for heat recovery and utilization.

6. The modularized dust collector system according to claim 5, wherein the low-temperature heat exchanger of the air outlet device (5) is provided with PTFE pipes and heat conducting media therein.

7. The modularized dust collector system according to claim 1, wherein the dust removal device (4) further comprises an ultrasonic auxiliary dust cleaner, the ultrasonic auxiliary dust cleaner converts the kinetic energy of the pressure gas into the fluctuating energy of the sound wave, and uses the fluctuating energy of the sound wave to achieve the purpose of removing dust.

8. The modularized dust collector system according to claim 1, wherein a dust conveying method of the dust conveying mechanism (62) of the dust collecting device (6) is pneumatic conveying.

9. A control method of a modularized dust collector system according to any one of claims 1 to 8, wherein dust-containing flue gas first passes through a smoke dust inlet channel (21), a smoke dust guide plate (22) and an air flow distribution plate (23) of an air inlet guide device (2), and then the dust-containing flue gas uniformly enters a filtering device (3), during which a part of large-particle dust falls directly into the dust hopper (61) of the dust collecting device (6) due to gravity and interception in the air inlet guide device (2); and
in the dust collector dust gas box (31) of the filtering device (3), a pressure difference is formed inside and outside a dust filter bag (32), the dust-containing flue gas flows into the dust filter bag (32), dust is intercepted by the dust filter bag (32), and is filtered and resides on the outer surface of the dust filter bag (32), clean gas enters the dust collector clean air box (51) of an air outlet device (5) through a dust filter bag mouth, and then is discharged through an air outlet channel (52) of the air outlet device (5) to realize gas-solid separation; and
after dust accumulated on the outer surface of dust filter bag (32) to a certain extent, the pressure difference inside and outside the filter bag rises; when the pressure difference reaches a set value or after a set time, the dust removal device (4) cleans the dust filter bag (32), and the blowback structure (41) and the blow pipe (42) blows the dust accumulated on the outer surface of the dust filter bag (32) with steering flow, which realizes the regeneration of the dust filter bag (32); and
the dust cleaned by the dust removal device (4) falls into the dust hopper (61) of the dust collecting device (6), and passes through a dust conveying mechanism (62) of the dust collecting device (6) to convey the dust collected in the dust hopper (61) to a designated area.

## Patentansprüche

1. Modularisiertes Staubsammler-System, umfassend eine Lufteinlassführungsvorrichtung (2), eine Filtervorrichtung (3), eine Staubentfernungsvorrichtung (4), eine Luftauslassvorrichtung (5) und eine Staubsammelvorrichtung (6);
wobei die Lufteinlassführungsvorrichtung (2) mit der Filtervorrichtung (3) in Verbindung steht, die Lufteinlassführungsvorrichtung (2) eine Kastenstruktur aufweist und einen Rauchstaubeinlasskanal (21), eine Rauchstaubführungsplatte (22) und eine Luftstromverteilungsplatte (23) umfasst, und die Rauchstaubführungsplatte (22) und die Luftstromverteilungsplatte (23) in dem Rauchstaubeinlasskanal (21) angeordnet sind; und
die Filtervorrichtung (3) umfasst einen Staubsammler-Staubgas-Kasten (31) und einen Staubfilterbeutel (32), der innerhalb des Staubsammler-Staubgas-Kastens (31) angeordnet ist; die Filtervorrichtung (3) ist eine integrierte Schub-Zug-Struktur vom Schubladentyp als ein Ganzes; und
die Luftauslassvorrichtung (5) steht mit der Filtervorrichtung (3) in Verbindung, und die Luftauslassvorrichtung (5) umfasst einen Staubsammler-saubere-Luft-Kasten (51) und einen Luftauslasskanal (52), der innerhalb des Staubsammler-saubere-LuftKastens (51) angeordnet ist; und
die Staubentfernungsvorrichtung (4) ist in dem Staubsammler-saubere-Luft-Kasten angeordnet, und die Staubentfernungsvorrichtung (4) umfasst eine Rückblasstruktur (41) und ein Blasrohr (42), das mit der Rückblasstruktur (41) verbunden ist; und
die Staubsammelvorrichtung (6) steht mit der Filtervorrichtung (3) in Verbindung, und die Staubsammelvorrichtung (6) weist eine Kastenstruktur auf; ein Staubtrichter (61) ist in einem oberen Bereich der Kastenstruktur bereitgestellt, und ein Staubbefördermechanismus (62) ist in einem unteren Bereich der Kastenstruktur bereitgestellt,
**dadurch gekennzeichnet, dass**
die Rückblasstruktur (41) mit der Gleitbahn auf eine gleitende Weise verbunden ist, und ein Antriebsmechanismus angeordnet ist, und der Antriebsmechanismus zum Antreiben der Rückblasstruktur (41) verwendet wird, um sich entlang der Gleitbahn zu bewegen;
der Antriebsmechanismus umfasst einen Motor, eine Bewegungsschraube und einen Bewegungsblock; die Bewegungsschraube ist in der Gleitbahn angeordnet, der Motor ist mit einem Ende der Bewegungsschraube durch eine Kupplung verbunden, ein anderes Ende der Bewegungsschraube ist drehbar mit einer Ablenkplatte in der Längsrichtung der Gleitbahn durch ein Lager verbunden, ein Schraubenloch ist in dem Bewegungsblock angeordnet, um mit der Bewegungsschraube zusammenzuwirken und verbunden zu werden, und der Bewegungsblock ist auch mit einem Verbindungsteil der Rückblasstruktur (41) verbunden, der Motor treibt die Bewegungsschraube an, um sich durch die Kupplung zu drehen, um zu bewirken, dass sich der Bewegungsblock linear bewegt, und der Bewegungsblock treibt das Blasrohr (42) an, um sich durch das Verbindungsteil zu bewegen, so dass das Blasrohr (42) den Staubfilterbeutel (32) der Reihe nach bläst.

2. Modularisiertes Staubsammler-System nach Anspruch 1, wobei ein Eingang des Rauchstaubeinlasskanals (21) der Lufteinlassführungsvorrichtung (2) eine Glockenmündungs-Struktur aufweist.

3. Modularisiertes Staubsammler-System nach Anspruch 1 oder 2, wobei die Luftstromverteilungsplatte (23) der Lufteinlassführungsvorrichtung (2) eine Vielzahl von Luftstromverteilungsplatten umfasst, und die Vielzahl von Luftstromverteilungsplatten entlang der Längsrichtung des Rauchstaubeinlasskanals (21) beabstandet ist.

4. Modularisiertes Staubsammler-System nach Anspruch 1, wobei der Staubfilterbeutel (32) der Filtervorrichtung (3) eine Vielzahl von Staubfilterbeuteln umfasst, und die Vielzahl von Staubfilterbeuteln in einem Beutelkäfig angeordnet ist, und der Beutelkäfig in dem Staubsammler-Staubgas-Kasten (31) angeordnet ist.

5. Modularisiertes Staubsammler-System nach Anspruch 1, wobei die Luftauslassvorrichtung (5) ferner einen Niedertemperatur-Wärmetauscher umfasst, wobei der Niedertemperatur-Wärmetauscher an einem Auslass des Staubsammler-saubere-Luft-Kastens (51) angeordnet ist und zur Wärmerückgewinnung und -nutzung verwendet wird.

6. Modularisiertes Staubsammler-System nach Anspruch 5, wobei der Niedertemperatur-Wärmetauscher der Luftauslassvorrichtung (5) mit PTFE-Rohren und wärmeleitenden Medien darin versehen ist.

7. Modularisiertes Staubsammler-System nach Anspruch 1, wobei die Staubentfernungsvorrichtung (4) ferner einen Ultraschall-Hilfsstaubreiniger umfasst, wobei der Ultraschall-Hilfsstaubreiniger die kinetische Energie des Druckgases in die fluktuierende Energie der Schallwelle umwandelt und die fluktuierende Energie der Schallwelle verwendet, um den Zweck des Entfernens von Staub zu erreichen.

8. Modularisiertes Staubsammler-System nach Anspruch 1, wobei ein Staubbeförderungsverfahren des Staubbeförderungsmechanismus (62) der Staubsammelvorrichtung (6) ein pneumatisches Befördern ist.

9. Steuerverfahren eines modularisierten Staubsammler-Systems nach einem der Ansprüche 1 bis 8, wobei staubhaltiges Rauchgas zuerst durch einen Rauchstaubeinlasskanal (21), eine Rauchstaubführungsplatte (22) und eine Luftstromverteilungsplatte (23) einer Lufteinlassführungsvorrichtung (2) strömt, und dann das staubhaltige Rauchgas gleichmäßig in eine Filtervorrichtung (3) eintritt, während der ein Teil des Staubs mit großen Partikeln aufgrund der Schwerkraft und des Abfangens in der Lufteinlassführungsvorrichtung (2) direkt in den Staubtrichter (61) der Staubsammelvorrichtung (6) fällt; und
in dem Staubsammler-Staubgas-Kasten (31) der Filtervorrichtung (3) eine Druckdifferenz innerhalb und außerhalb eines Staubfilterbeutels (32) gebildet wird, das staubhaltige Rauchgas in den Staubfilterbeutel (32) strömt, Staub durch den Staubfilterbeutel (32) abgefangen wird und gefiltert wird und sich auf der Außenfläche des Staubfilterbeutels (32) befindet, sauberes Gas in den Staubsammler-saubere-Luft-Kasten (51) einer Luftauslassvorrichtung (5) durch eine Staubfilterbeutel-Mündung eintritt und dann durch einen Luftauslasskanal (52) der Luftauslassvorrichtung (5) abgeführt wird, um eine Gas-Feststoff-Trennung zu realisieren; und
nachdem sich Staub auf der Außenfläche des Staubfilterbeutels (32) in einem gewissen Ausmaß angesammelt hat, die Druckdifferenz innerhalb und außerhalb des Filterbeutels steigt; wenn die Druckdifferenz einen eingestellten Wert oder nach einer eingestellten Zeit erreicht, die Staubentfernungsvorrichtung (4) den Staubfilterbeutel (32) reinigt, und die Rückblasstruktur (41) und das Blasrohr (42) den Staub, der sich auf der Außenfläche des Staubfilterbeutels (32) angesammelt hat, mit Lenkströmung bläst, was die Regeneration des Staubfilterbeutels (32) realisiert; und
der durch die Staubentfernungsvorrichtung (4) gereinigte Staub in den Staubtrichter (61) der Staubsammelvorrichtung (6) fällt und durch einen Staubbeförderungsmechanismus (62) der Staubsammelvorrichtung (6) strömt, um den in dem Staubtrichter (61) gesammelten Staub zu einem bestimmten Bereich zu befördern.

## Revendications

1. Système collecteur de poussière modulaire, comprenant un dispositif de guidage d'entrée d'air (2), un dispositif de filtration (3), un dispositif d'élimination de poussière (4), un dispositif de sortie d'air (5) et un dispositif de collecte de poussière (6);
dans lequel le dispositif de guidage d'entrée d'air (2) est en communication avec le dispositif de filtration (3), le dispositif de guidage d'entrée d'air (2) est d'une structure de boîte, et comprend un canal d'entrée de poussière de fumée (21), une plaque de guidage de poussière de fumée (22) et une plaque de distribution d'écoulement d'air (23), et la plaque de guidage de poussière de fumée (22) et la plaque de distribution d'écoulement d'air (23) sont agencées dans le canal d'entrée de poussière de fumée (21); et
le dispositif de filtration (3) comprend une boîte à gaz de poussière de collecteur de poussière (31), et un sac de filtre à poussière (32) agencé à l'intérieur de la boîte à gaz de poussière de collecteur de poussière (31); le dispositif de filtration (3) est une structure presser-tirer de type tiroir intégrée dans son ensemble; et
le dispositif de sortie d'air (5) est en communication avec le dispositif de filtration (3), et le dispositif de sortie d'air (5) comprend une boîte à air propre de collecteur de poussière (51), et un canal de sortie d'air (52) agencé à l'intérieur de la boîte à air propre de collecteur de poussière (51); et
le dispositif d'élimination de poussière (4) est agencé dans la boîte à air propre de collecteur de poussière, et le dispositif d'élimination de poussière (4) comprend une structure de refoulement (41) et un tuyau de soufflage (42) raccordé à la structure de refoulement (41); et
le dispositif de collecte de poussière (6) est en communication avec le dispositif de filtration (3), et le dispositif de collecte de poussière (6) est d'une structure de boîte; une trémie à poussière (61) est prévue dans une zone supérieure de la structure de boîte, et un mécanisme de transport de poussière (62) est prévu dans une zone inférieure de la structure de boîte,
**caractérisé en ce que**
la structure de refoulement (41) est raccordée à la piste coulissante d'une manière coulissante, et un mécanisme d'entraînement est agencé, et le mécanisme d'entraînement est utilisé pour entraîner la structure de refoulement (41) à se déplacer le long de la piste coulissante;
le mécanisme d'entraînement comprend un moteur, une vis-mère et un bloc mobile; la vis-mère est agencée dans la piste coulissante, le moteur est raccordé à une extrémité de la vis-mère par l'intermédiaire d'un couplage, une autre extrémité de la vis-mère est raccordée en rotation à un déflecteur dans la direction de longueur de la piste coulissante par l'intermédiaire d'un palier, un trou de vis est agencé dans le bloc mobile pour être coopéré et raccordé avec la vis-mère, et le bloc mobile est également raccordé à une partie de raccordement de la structure de refoulement (41), le moteur entraîne la vis-mère à tourner par l'intermédiaire du couplage pour amener le bloc mobile à se déplacer linéairement, et le bloc mobile entraîne le tuyau de soufflage (42) à se déplacer par l'intermédiaire de la partie de raccordement, de sorte que le tuyau de soufflage (42) souffle le sac de filtre à poussière (32) en séquence.

2. Système collecteur de poussière modulaire selon la revendication 1, dans lequel une entrée du canal d'entrée de poussière de fumée (21) du dispositif de guidage d'entrée d'air (2) est d'une structure bord évasé.

3. Système collecteur de poussière modulaire selon la revendication 1 ou 2, dans lequel la plaque de distribution d'écoulement d'air (23) du dispositif de guidage d'entrée d'air (2) comprend une pluralité de plaques de distribution d'écoulement d'air, et la pluralité de plaques de distribution d'écoulement d'air est espacée le long de la direction de longueur du canal d'entrée de poussière de fumée (21).

4. Système collecteur de poussière modulaire selon la revendication 1, dans lequel le sac de filtre à poussière (32) du dispositif de filtration (3) comprend une pluralité de sacs de filtre à poussière, et la pluralité de sacs de filtre à poussière est agencée dans une cage à sacs, et la cage à sacs est agencée dans la boîte à gaz de poussière de collecteur de poussière (31).

5. Système collecteur de poussière modulaire selon la revendication 1, dans lequel le dispositif de sortie d'air (5) comprend en outre un échangeur de chaleur à basse température, l'échangeur de chaleur à basse température est situé au niveau d'une sortie de la boîte à air propre de collecteur de poussière (51) et est utilisé pour la récupération et l'utilisation de chaleur.

6. Système collecteur de poussière modulaire selon la revendication 5, dans lequel l'échangeur de chaleur à basse température du dispositif de sortie d'air (5) est pourvu de tuyaux en PTFE et d'un milieu thermoconducteur dans celui-ci.

7. Système collecteur de poussière modulaire selon la revendication 1, dans lequel le dispositif d'élimination de poussière (4) comprend en outre un nettoyeur de poussière auxiliaire ultrasonique, le nettoyeur de poussière auxiliaire ultrasonique convertit l'énergie cinétique du gaz sous pression en l'énergie fluctuante de l'onde sonore, et utilise l'énergie fluctuante de l'onde sonore pour atteindre le but d'élimination de poussière.

8. Système collecteur de poussière modulaire selon la revendication 1, dans lequel un procédé de transport de poussière du mécanisme de transport de poussière (62) du dispositif de collecte de poussière (6) est un transport pneumatique.

9. Procédé de commande d'un système collecteur de poussière modulaire selon l'une quelconque des revendications 1 à 8, dans lequel un gaz de combustion contenant de la poussière passe d'abord à travers un canal d'entrée de poussière de fumée (21), une plaque de guidage de poussière de fumée (22) et une plaque de distribution d'écoulement d'air (23) d'un dispositif de guidage d'entrée d'air (2), puis le gaz de combustion contenant de la poussière entre uniformément dans un dispositif de filtration (3), pendant lequel une partie de poussière de grandes particules tombe directement dans la trémie à poussière (61) du dispositif de collecte de poussière (6) en raison de la gravité et de l'interception dans le dispositif de guidage d'entrée d'air (2); et
dans la boîte à gaz de poussière de collecteur de poussière (31) du dispositif de filtration (3), une différence de pression est formée à l'intérieur et à l'extérieur d'un sac de filtre à poussière (32), le gaz de combustion contenant de la poussière s'écoule dans le sac de filtre à poussière (32), la poussière est interceptée par le sac de filtre à poussière (32), et est filtrée et réside sur la surface externe du sac de filtre à poussière (32), un gaz propre entre dans la boîte à air propre de collecteur de poussière (51) d'un dispositif de sortie d'air (5) à travers une bouche de sac de filtre à poussière, puis est déchargé à travers un canal de sortie d'air (52) du dispositif de sortie d'air (5) pour réaliser une séparation gaz-solide; et
après que la poussière s'est accumulée sur la surface externe du sac de filtre à poussière (32) dans une certaine mesure, la différence de pression à l'intérieur et à l'extérieur du sac de filtre augmente; lorsque la différence de pression atteint une valeur définie ou après un temps défini, le dispositif d'élimination de poussière (4) nettoie le sac de filtre à poussière (32), et la structure de refoulement (41) et le tuyau de soufflage (42) soufflent la poussière accumulée sur la surface externe du sac de filtre à poussière (32) avec un écoulement directeur, qui réalise la régénération du sac de filtre à poussière (32); et
la poussière nettoyée par le dispositif d'élimination de poussière (4) tombe dans la trémie à poussière (61) du dispositif de collecte de poussière (6), et passe à travers un mécanisme de transport de poussière (62) du dispositif de collecte de poussière (6) pour transporter la poussière collectée dans la trémie à poussière (61) jusqu'à une zone désignée.
